# EUROPEAN PATENT APPLICATION

(11) **EP 4 202 878 A1**
(43) Date of publication of application: **28.06.2023**
(21) Application number: 21858098.3
(22) Date of filing: 20.07.2021
(51) Int. Cl.: G07G 1/00, G06K 7/10, G06K 7/14

(54) **PRODUCT READING DEVICE**

(30) Priority: 20.08.2020 JP 2020139690
(71) Applicant: Toshiba TEC Kabushiki Kaisha, Tokyo 141-8562 (JP)
(72) Inventor: YAJIMA, Shinsuke, Tokyo 141-8562 (JP); NAITO, Hidehiro, Tokyo 141-8562 (JP); ITO, Masaki, Tokyo 141-8562 (JP); KAWAGUCHI, Yuki, Tokyo 141-8562 (JP); HATTORI, Daisuke, Tokyo 141-8562 (JP); SAITOU, Takahiro, Tokyo 141-8562 (JP); SUZUKI, Kota, Tokyo 141-8562 (JP)
(74) Representative: Hoffmann Eitle
(86) International application number: PCT/JP2021/027173
(87) International publication number: WO 2022/038949

(57) **Abstract**

A product reading device of an embodiment is a product reading device that reads a code symbol attached to a product, and that includes a first reading unit that forms a reading region, in which the code symbol can be read, on a side where an operator is located, a second reading unit that is provided at a position different from that of the first reading unit and forms the reading region on the side where the operator is located, and an information reading unit that reads code information held in the code symbol from a reading result of the first reading unit or the second reading unit, wherein the reading region of the first reading unit and the reading region of the second reading unit at least partially overlap.

## Description

### FIELD

An embodiment of the present invention relates to a product reading device.

### BACKGROUND

In recent years, a self-checkout machine has been introduced in retail stores and the like. As the conventional self-checkout machine, for example, a self-checkout machine in which a customer himself/herself performs product registration by holding a product with a barcode over a barcode reading scanner has been known (see, for example, Patent Literature 1). By introducing the self-checkout machine, it becomes not necessary for a store clerk to perform the product registration, and the retail store can receive an advantage such as being able to reduce the number of staffs.

### SUMMARY OF THE INVENTION

### Problem to be Solved by the Invention

However, unlike a store clerk who is accustomed to product registration, a customer is not accustomed to the product registration. Thus, the related art has a problem that the product registration takes time.

For example, although the store clerk who is accustomed to the product registration knows an optimum position to hold the product, the customer who is not accustomed to the product registration often performs the product registration by bringing a product as close as possible to a reading device. When the product is too close to the reading device, illumination light may be reflected, and there is a possibility that the reading device cannot read a barcode normally. In this case, since the customer needs to perform reading of the barcode again, there is a problem that reading efficiency decreases.

An object of the present invention is to realize a product reading device with improved reading efficiency.

### Means for Solving Problem

A product reading device that reads a code symbol attached to a product, the product reading device includes a first reading unit that forms a reading region, in which the code symbol can be read, on a side where an operator is located; a second reading unit that is provided at a position different from that of the first reading unit, and forms the reading region on the side where the operator is located; and an information reading unit that reads code information held in the code symbol from a reading result of the first reading unit or the second reading unit, wherein the reading region of the first reading unit and the reading region of the second reading unit at least partially overlap.

### BRIEF DESCRIPTION OF DRAWINGS

FIG. 1 is a view illustrating an outline of a self-checkout system according to an embodiment.
FIG. 2 is a perspective view illustrating an overall configuration of a product reading device according to the embodiment.
FIG. 3 is a view for describing an example of the configuration of the product reading device according to the embodiment.
FIG. 4 is a view for describing an example of movement of a product of when a customer performs product registration.
FIG. 5 is a view for describing an example of a reading (imaging) range of the product reading device according to the embodiment.
FIG. 6 is a block diagram illustrating an example of a hardware configuration of the product reading device according to the embodiment.
FIG. 7 is a block diagram illustrating an example of a functional configuration of the product reading device according to the embodiment.
FIG. 8 is a view illustrating an example of a configuration of an imaging unit of a product reading device according to a second modification example.

### DETAILED DESCRIPTION

Hereinafter, a self-checkout system to which a product reading device according to an embodiment is applied will be described with reference to the drawings. Note that the present invention is not limited by the embodiments described below.

### (Configuration of a self-checkout system)

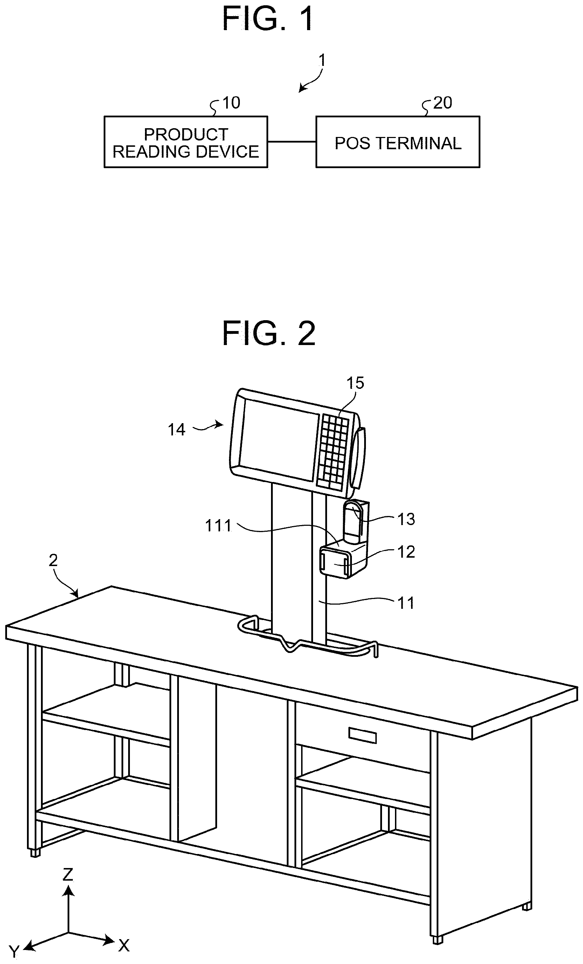

FIG. 1 is a view illustrating an outline of a self-checkout system 1. The self-checkout system 1 includes a product reading device 10 and a POS terminal 20. The product reading device 10 and the POS terminal 20 are communicably connected.

The product reading device 10 reads a code symbol attached to a product. The POS terminal 20 performs product registration processing on the basis of the code symbol read by the product reading device 10. Furthermore, the POS terminal 20 performs settlement processing on the basis of information of the registered product. In the present embodiment, it is assumed that a customer himself/herself performs the reading of the code symbol attached to the product, the product registration processing, and the settlement processing.

### (Configuration of a product reading device)

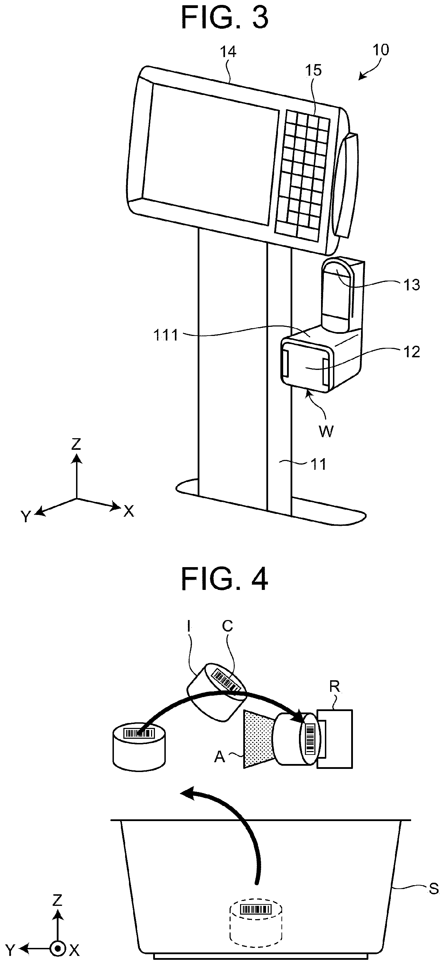

FIG. 2 is a perspective view illustrating an overall configuration of the product reading device 10. FIG. 3 is a view for describing an example of the configuration of the product reading device 10. Here, a state in which the product reading device 10 is viewed from a side of a standing position of the customer who performs the product registration is illustrated in FIG. 2 and FIG. 3.

The product reading device 10 is erected on a bagger table 2 on which a shopping basket or the like holding a product is placed. Note that the POS terminal 20 is separately provided in the vicinity of an end of the bagger table 2 although not illustrated. The POS terminal 20 executes sales data processing including product registration processing, checkout processing, and the like on the basis of data of a product or the like read by the product reading device 10.

The product reading device 10 includes a main body portion 11, a first imaging portion 12, a second imaging portion 13, a display unit 14, and a keyboard 15. The main body portion 11 is formed in a substantially rectangular parallelepiped shape and is erected on the bagger table 2. A height of the main body portion 11 is preferably about a height of eyes of the customer on the bagger table 2, for example.

An imaging unit 111 is provided on a side of the main body portion 11. The imaging unit 111 is supported on the side of the main body portion 11 by a support member (not illustrated). Specifically, the imaging unit 111 is supported on the side of the main body portion 11 by the support member at a position separated from a shopping basket installation surface of the bagger table 2.

The imaging unit 111 includes an imaging window W on the side of the standing position of the customer. The first imaging portion 12, and an illumination unit (not illustrated) that emits light to an imaging object by turning on a light source such as an LED are installed in the imaging window W. The customer holds the product he/she wants to purchase over the imaging window W and performs reading (imaging) of the product.

The first imaging portion 12 captures an image including the code symbol attached to an article such as the product. In addition, the first imaging portion 12 forms an imaging region capable of imaging the code symbol attached to the product on a side on which the customer (example of the "operator") is located. The first imaging portion 12 includes an imaging element such as a charge coupled device (CCD) or a complementary MOS (CMOS), and an imaging lens. The imaging lens forms an image of the imaging region on the imaging element.

The first imaging portion 12 images the outside of the imaging unit 111 via the imaging window W. For example, the first imaging portion 12 optically images a barcode, a two-dimensional code, or the like printed on the product. Note that the barcode, the two-dimensional code, and the like are examples of the "code symbol".

Here, it is assumed that data such as an identifier of the product (product code) and a price (example of "code information") is held in the barcode, the two-dimensional code, or the like printed on the product in a state of being encoded in the barcode, the two-dimensional code, or the like.

Note that it can be said that the first imaging portion 12 is an example of a "first reading unit" and the imaging region is an example of a "reading region" since it becomes possible to read the code information when the first imaging portion 12 optically images the barcode, the two-dimensional code, or the like. Furthermore, a scanner that reads the barcode, the two-dimensional code, or the like by reflection of laser light may be provided instead of the first imaging portion 12.

The second imaging portion 13 is provided at a position different from that of the first imaging portion 12. In the present embodiment, the second imaging portion 13 is fixed to an upper surface of the imaging unit 111. Similarly to the first imaging portion 12, the second imaging portion 13 optically images the barcode, the two-dimensional code, or the like printed on the product.

Furthermore, the second imaging portion 13 forms an imaging region on the side where the customer is located. The second imaging portion 13 is an example of a "second reading unit". Note that a scanner that reads the barcode, the two-dimensional code, or the like by reflection of laser light may be provided instead of the second imaging portion 13.

Here, since the second imaging portion 13 is provided on the upper surface of the imaging unit 111, the imaging region of the first imaging portion 12 and the imaging region of the second imaging portion 13 are different. Furthermore, the imaging region of the first imaging portion 12 and the imaging region of the second imaging portion 13 at least partially overlap.

As described above, since the product reading device 10 includes the first imaging portion 12 and the second imaging portion 13 having the above-described configurations, it is possible to improve the reading efficiency of the code symbol. Hereinafter, the reason why including the second imaging portion 13 improves the reading efficiency of the code symbol will be described in detail.

First, a case where there is only one reading unit (imaging portion) will be described. FIG. 4 is a view for describing an example of movement of the product of when the customer performs the product registration. Here, a case where the customer who is not accustomed to the product registration processing causes a reading unit R to read a barcode C attached to a product I will be described.

After taking out the product I held in the shopping basket S, the customer brings the barcode C close to the imaging window W of the reading unit R and performs reading by moving the product I along a course indicated by an arrow in the drawing with the surface to which the barcode C is attached facing upward, for example.

Here, in order for the reading device in FIG. 4 to read the barcode C, the entire barcode C needs to be in an imaging region A. However, in a case where the product I moves along the course indicated by the arrow in FIG. 4, the entire barcode C does not enter the imaging region A unless the customer brings the product I to the vicinity of the imaging window W.

In addition, it is generally known that the customer often performs the reading by bringing the surface of the product I, to which surface the barcode C is attached, as close as possible to the reading unit R. In this case, when the product I is too close to the imaging window W, the illumination light may be reflected. When the illumination light is reflected, an image captured by the reading unit R becomes an image with halation, and there is a possibility that the barcode C cannot be recognized and the reading fails.

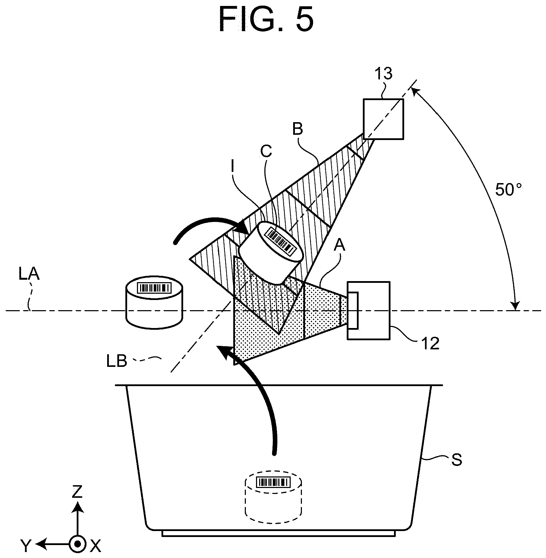

On the other hand, in the product reading device 10 according to the present embodiment, even when the imaging of the barcode C fails in the first imaging portion 12, the barcode C can be read when the barcode C can be normally imaged by the second imaging portion 13. Thus, the reading efficiency can be improved. Hereinafter, an operation example of the product reading device 10 of the present embodiment will be described in detail with reference to FIG. 5. FIG. 5 is a view for describing an example of the reading (imaging) region of the product reading device 10 according to the embodiment.

The first imaging portion 12 is provided at a position separated from the installation surface of the shopping basket S on the bagger table 2 (see FIG. 2). In addition, the first imaging portion 12 is arranged in such a manner that an optical axis LA of the first imaging portion 12 is substantially parallel to the installation surface of the shopping basket S on the bagger table 2.

The second imaging portion 13 is provided at a position above the first imaging portion 12. Furthermore, the second imaging portion 13 is arranged in such a manner that an optical axis LB of the second imaging portion 13 intersects with the optical axis LA. As an example, the second imaging portion 13 is arranged in such a manner that an angle formed by the optical axis LA and the optical axis LB is 50°.

The first imaging portion 12 forms the imaging region A on the side where the customer is located. Specifically, the first imaging portion 12 forms the imaging region A centered on the optical axis LA on the side where the customer is located.

Furthermore, the second imaging portion 13 forms an imaging region B on the side where the customer is located. Specifically, the second imaging portion 13 forms the imaging region B centered on the optical axis LB on the side where the customer is located. Furthermore, an imaging angle of the second imaging portion 13 is arranged in such a manner that the optical axis LB intersects with the optical axis LA. That is, there is an overlapping portion between the imaging region A and the imaging region B.

Specifically, the imaging region B formed by the second imaging portion 13 overlaps with the imaging region A formed by the first imaging portion 12 in front of the imaging window W (front side as viewed from the customer) (not illustrated). Here, it is preferable that the overlapping portion between the imaging region A and the imaging region B is designed to be above the shopping basket S placed on the bagger table 2.

As a result, in the product reading device 10, the product I moved from the shopping basket S in a direction of the imaging window W can be imaged by the first imaging portion 12 and the second imaging portion 13 from different angles.

A case where the customer causes the product reading device 10 to read the barcode C attached to the product I will be described on the assumption of the above. For example, when the customer brings the product I close to the imaging window W with the surface to which the barcode C is attached facing upward along a course similar to that in FIG. 4, the entire barcode C facing upward first enters the imaging region B. Then, when the customer further keeps moving the product I, the entire barcode C enters the imaging region A in the vicinity of the imaging window W.

With such a configuration, even in a case where the customer brings the product I too close to the imaging window W and the first imaging portion 12 fails to image the entire barcode C due to reflection of the illumination light, or the like, there is a high possibility that the second imaging portion 13 can image the entire barcode C.

That is, in the product reading device 10 according to the present embodiment, an opportunity for the first imaging portion 12 or the second imaging portion 13 to image the barcode C increases in the process in which the customer moves the product I toward the imaging window W. Thus, the reading efficiency of the barcode C can be improved.

Note that although the second imaging portion 13 of the product reading device 10 according to the present embodiment is provided in such a manner that the angle formed by the optical axis LA and the optical axis LB is 50°, the angle is not limited to 50°. The angle is preferably 30° to 90°, and is more preferably 45° to 90° in such a manner that the entire barcode C facing upward enters the imaging region B in the process in which the customer moves the product I in the direction of the imaging window W.

Returning to FIG. 2 and FIG. 3, the description will be continued. The display unit 14 is provided on an upper portion of the main body portion 11. The display unit 14 is a display device with a touch panel including a display device such as a liquid crystal display (LCD). The display unit 14 displays a name, price, and the like of the registered product I for the customer who performs the product registration according to sales registration processing by the POS terminal 20.

The keyboard 15 is provided in the vicinity (side portion) of the display unit 14. The keyboard 15 has various keys and the like to perform registration of a product I that cannot be registered with the barcode C, the two-dimensional code, or the like. Note that although an example in which the display unit 14 and the keyboard 15 are integrally provided is illustrated in FIG. 2 and FIG. 3, these may be provided separately.

Note that the imaging unit 111 may be supported in a state of being fixed to the main body portion 11 or may be supported in a rotatable state. In the latter case, the main body portion 11 rotatably supports the imaging unit 111 in a tilt direction with an X-axis direction in the drawing as a rotation axis direction, for example. In this case, the main body portion 11 is an example of a "support portion".

With such a configuration, an angle formed by the optical axis LA of the first imaging portion 12 and the installation surface of the product reading device 10 can be changed. That is, an imaging position (imaging angle) of the product I or the like by the first imaging portion 12 can be changed.

Furthermore, since the second imaging portion 13 is fixed to the upper surface of the imaging unit 111, the angle formed by the optical axis LA and the optical axis LB does not change even when the angle formed by the optical axis LA and the installation surface of the product reading device 10 is changed.

In other words, when the angle formed by the optical axis LA of the first imaging portion 12 and the installation surface of the product reading device 10 is changed, the angle formed by the optical axis LB of the second imaging portion 13 and the installation surface of the product reading device 10 also changes at a similar ratio in conjunction therewith.

As a result, in the product reading device 10, for example, imaging positions by the first imaging portion 12 and the second imaging portion 13 can be changed in accordance with the height of the customer. In addition, in the product reading device 10, in a case where the product I or the like that cannot be tilted, such as a wet dish is to be imaged, the imaging positions by the first imaging portion 12 and the second imaging portion 13 can be changed.

Thus, operability related to the reading of the product can be improved in the product reading device 10. Note that the imaging unit 111 may be also configured to be movable in a height direction (Z-axis direction) of the main body portion 11.

### (Hardware configuration of the product reading device)

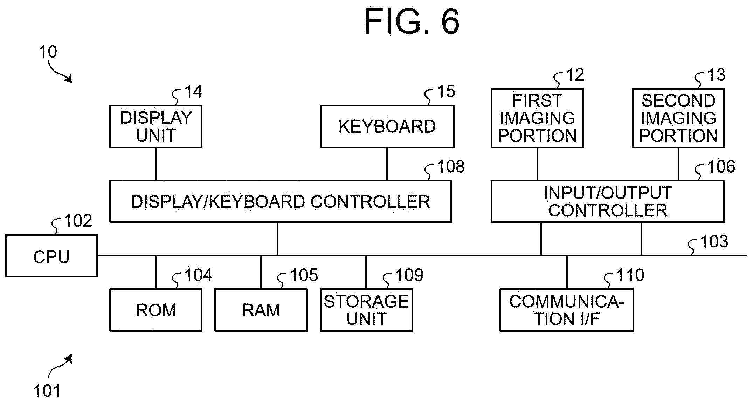

Next, the hardware configuration of the product reading device 10 will be described. FIG. 6 is a view illustrating an example of the hardware configuration of the product reading device 10. The product reading device 10 includes a microcomputer 101, and this microcomputer 101 drives and controls each unit.

The microcomputer 101 includes a CPU 102, a ROM 104, a RAM 105, an input/output controller 106, a display/keyboard controller 108, a storage unit 109, and a communication interface 110. The components are connected via a bus line 103.

The central processing unit (CPU) 102 integrally controls the units. The read only memory (ROM) 104 previously stores fixed information such as a control program. The random access memory (RAM) 105 stores various kinds of data in a rewritable manner and functions as a work area or the like.

Thus, the microcomputer 101 configures an information processing unit that executes information processing. All or a part of the R_AM 105 is a nonvolatile memory.

The input/output controller 106 is connected to the first imaging portion 12 and the second imaging portion 13. The input/output controller 106 outputs images (image data) captured by the first imaging portion 12 and the second imaging portion 13 to the microcomputer 101. Furthermore, the input/output controller 106 outputs a control signal output from the microcomputer 101 to the first imaging portion 12 and the second imaging portion 13.

The display/keyboard controller 108 drives and controls the display unit 14 and causes the display unit 14 to display various images. Furthermore, the display/keyboard controller 108 outputs an operation signal associated with a touch operation on the display unit 14, and an operation signal from the keyboard 15 to the microcomputer 101.

The storage unit 109 is a storage device such as a hard disk drive (HDD) or a solid state drive (SSD). The storage unit 109 stores various programs and various kinds of data related to the operation of the product reading device 10. The communication interface 110 enables data communication with another device (POS terminal 20) via a connecting line such as a LAN cable.

### (Function of the product reading device)

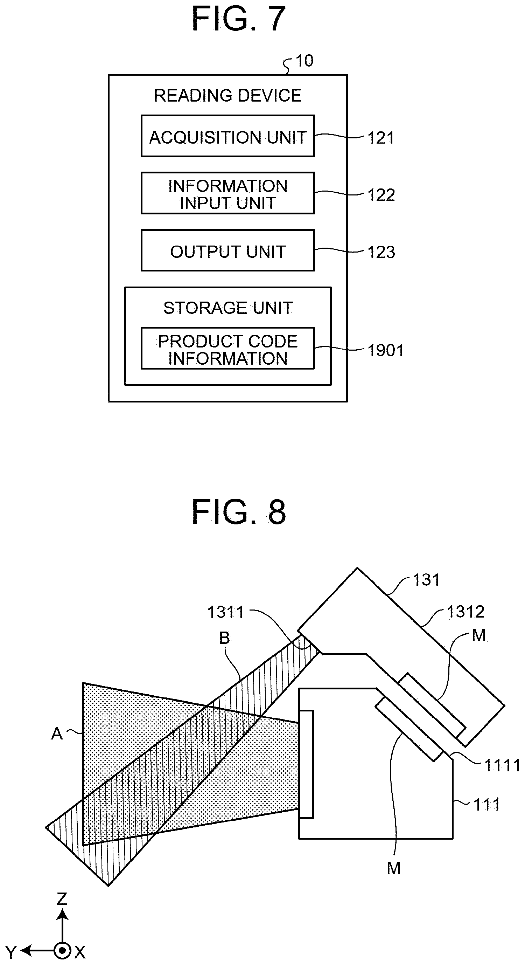

Next, a functional configuration of the product reading device 10 will be described with reference to FIG. 7. FIG. 7 is a view illustrating an example of the functional configuration of the product reading device 10. The product reading device 10 includes an acquisition unit 121, an information reading unit 122, and an output unit 123 as the functional configuration.

More specifically, the product reading device 10 includes the functional configuration as a software configuration in cooperation with the CPU 102, and the programs stored in the storage unit 109. Note that a part or all of the functional configuration may be realized by a hardware configuration such as the CPU 102 or a dedicated circuit.

The acquisition unit 121 acquires the image captured by the first imaging portion 12 and the image captured by the second imaging portion 13. Specifically, when a transaction start is instructed by an operation via the keyboard 15 or the display unit 14 or a signal notified from the POS terminal 20, the acquisition unit 121 starts capturing, via the input/output controller 106, the image data captured by the first imaging portion 12 and the second imaging portion 13.

In addition, when it is instructed by an operation on the keyboard 15 or the display unit 14 or a signal notified from the POS terminal 20 to end the transaction, the acquisition unit 121 stops capturing the image data.

The information reading unit 122 reads code information held in a code symbol from an imaging result of the first imaging portion 12 or the second imaging portion 13. Specifically, the information reading unit 122 recognizes the barcode C attached to the product I from the image acquired by the acquisition unit 121. Next, the information reading unit 122 reads a product code of the imaged product I by referring to the recognized barcode C and product code information 1091 stored in the storage unit 109.

Note that the self-checkout system 1 according to the present embodiment can perform the product registration processing as long as the information reading unit 122 can read the product code from either the image captured by the first imaging portion 12 or the image captured by the second imaging portion 13.

The output unit 123 outputs the code information read by the information reading unit 122. In addition, the output unit 123 does not output the same code information until a predetermined time elapses after outputting the code information.

Specifically, the output unit 123 outputs the product code read by the information reading unit 122 to the POS terminal 20. Furthermore, in a case of outputting the product code, the output unit 123 does not output the product code to the POS terminal 20 until the predetermined time elapses after outputting the product code. Note that the POS terminal 20 performs the product registration processing on the basis of the product code output from the output unit 123.

With such a configuration, in a case where the barcode C attached to the product I can be normally imaged by both of the first imaging portion 12 and the second imaging portion 13, only the product code read by the information reading unit 122 first is output, and the product code subsequently read by the information reading unit 122 is not output. Thus, it is possible to prevent the product I from being doubly registered.

### (Effect of the product reading device)

An effect of the product reading device 10 according to the present embodiment will be described. The product reading device 10 includes the first imaging portion 12 that forms the imaging region, in which the code symbol can be imaged, on the side where the customer is located, and the second imaging portion 13 that is provided at a position different from that of the first imaging portion 12 and that forms the imaging region on the side where the customer is located.

Since the second imaging portion 13 is provided at the position different from that of the first imaging portion 12, the imaging region A of the first imaging portion 12 and the imaging region B of the second imaging portion 13 are different. That is, there is a possibility that the barcode C can be imaged by the second imaging portion 13 even when the barcode C is located at a place where the imaging cannot be performed by the first imaging portion 12.

Similarly, there is a possibility that the barcode C can be imaged by the first imaging portion 12 even when the barcode C is located at a place where the imaging cannot be performed by the second imaging portion 13. Thus, the product reading device 10 according to the present embodiment can expand a range in which the barcode C attached to the product I can be imaged, and can improve the reading efficiency of the barcode C.

In addition, the imaging region A and the imaging region B at least partially overlap. As a result, the second imaging portion 13 can image the product I, which is moved in the direction of the imaging window W, from an angle different from that of the first imaging portion 12 in the space in front of the imaging window W.

Furthermore, with this configuration, it is possible to reduce a proportion occupied by a region where neither the first imaging portion 12 nor the second imaging portion 13 can image the barcode C (region not belonging to the imaging region A nor the imaging region B).

Thus, the product reading device 10 according to the present embodiment can increase the opportunity to image the barcode C attached to the product I in the process in which the product I is moved in the direction of the imaging window W. That is, the product reading device 10 according to the present embodiment can improve the reading efficiency of the barcode C.

In addition, when the imaging unit 111 is supported in a rotatable state by the main body portion 11, the angle formed by the optical axis LA and the installation surface of the product reading device 10 can be changed. Furthermore, the second imaging portion 13 is attached in a state of being fixed to the upper surface of the imaging unit 111 including the first imaging portion 12.

Thus, when the angle formed by the optical axis LA of the first imaging portion 12 and the installation surface of the product reading device 10 is changed, the angle formed by the optical axis LB of the second imaging portion 13 and the installation surface of the product reading device 10 also changes at a similar ratio in conjunction therewith. Thus, the product reading device 10 according to the present embodiment can improve operability related to the reading of the product.

Furthermore, the second imaging portion 13 is provided above the first imaging portion 12. As a result, it is possible to further increase the opportunity to image the barcode C attached to the product I in the process in which the product I is moved.

This is because the product I enters the imaging region B before entering the imaging region A in the process in which the customer moves the product I and the opportunity to image the barcode C increases since the customer often brings the product I close to the imaging window W generally with the surface to which the barcode C is attached facing upward.

Furthermore, the optical axis LA of the first imaging portion 12 and the optical axis LB of the second imaging portion 13 intersect with each other. As a result, it is considered that a portion where the imaging region A and the imaging region B overlap with each other is generated on a movement path of the product I.

Thus, it is considered that the proportion occupied by the region where neither the first imaging portion 12 nor the second imaging portion 13 can image the barcode C in the space on the movement path of the product I decreases. That is, there is an increased possibility that the entire barcode C can be imaged by either the first imaging portion 12 or the second imaging portion 13 in the process in which the customer moves the product I, and the product reading device 10 according to the present embodiment can further improve the reading efficiency of the barcode C.

In addition, the product reading device 10 according to the present embodiment includes an information reading unit 122 that reads the code information held in the code symbol from the imaging result of the first imaging portion 12 or the second imaging portion 13, and an output unit 123 that outputs the code information read by the information reading unit 122. In addition, the output unit 123 does not output the same code information until a predetermined time elapses after outputting the code information.

As a result, even in a case where the barcode C attached to the product I can be normally imaged by both of the first imaging portion 12 and the second imaging portion 13, the same product code is not output until the predetermined time elapses after the product code is output once. Thus, it is possible to prevent one product I from being erroneously registered doubly.

Note that it is possible to implement the above-described embodiment with appropriate modification by changing a part of the configuration or function of the product reading device 10. Thus, in the following, some modification examples according to the above-described embodiment will be described as the other embodiments.

Note that it is assumed that points different from the above-described embodiment will be mainly described in the following, and detailed description of points common to the already-described contents will be omitted. In addition, the modification examples described in the following may be implemented individually, or may be implemented in appropriate combination.

### <First modification example>

Although the form in which the product reading device 10 includes two imaging portions that are the first imaging portion 12 and the second imaging portion 13 has been described in the above embodiment, this is not a limitation, and three or more imaging portions may be included.

For example, a product reading device 10 may further include an imaging portion (third imaging portion) below the first imaging portion 12 together with the first imaging portion 12 and the second imaging portion 13 described above. In this case, even in a case where the barcode C faces downward, the entire barcode C can be imaged, and the reading efficiency can be further improved.

### <Second modification example>

Although the form in which the second imaging portion 13 is fixed to the upper surface of the imaging unit 111 has been described in the above embodiment, this is not a limitation, and a second imaging portion 13 may be configured to be detachable from an upper surface of an imaging unit 111.

In this case, as illustrated in FIG. 8, the second imaging portion 13 may be a handy scanner 131 of a type that is held by a customer and that reads a barcode C attached to a product I. Here, FIG. 8 is a view illustrating an example of a configuration of an imaging unit 111 of a product reading device 10 according to the second modification example.

The imaging unit 111 including a first imaging portion 12 is fixed to a support member that supports the imaging unit 111 to a main body portion 11 (see FIG. 3). Note that it can be also said that the imaging unit 111 is a "first reading unit" since the imaging unit 111 has the first imaging portion 12 built-in.

The imaging unit 111 has a tilted portion 1111 that is a tilted structure rising from a back side toward a front side. The tilted portion 1111 includes a magnet M inside. The tilted portion 1111 detachably supports the handy scanner 131 on the imaging unit 111 by magnetic force of the magnet M.

The handy scanner 131 includes a reading unit 1311 and a grip portion 1312. The reading unit 1311 includes an imaging element such as a CCD or a CMOS. The reading unit 1311 reads a code symbol such as a barcode C or a two-dimensional code from an image captured by the imaging element.

Note that although the reading unit 1311 reads the code symbol such as the barcode C or the two-dimensional code from the image captured by the imaging element in the present modification example, a method of reading the code symbol is not limited thereto. For example, the reading unit 1311 may be configured to read the code symbol such as the barcode C or the two-dimensional code by reflection of laser light.

The grip portion 1312 is a portion gripped by the customer during operation of the handy scanner 131. The grip portion 1312 includes a magnet M inside. The handy scanner 131 is supported by the tilted portion 1111 of the imaging unit 111 by magnetic force of the magnet M.

With such a configuration, when the handy scanner 131 is supported by the tilted portion 1111, the reading unit 1311 protrudes toward a front side of the imaging unit 111 (Y-axis direction) in a state of facing a direction substantially orthogonal to a tilted surface of the tilted portion 1111. As a result, the product reading device 10 according to the present modification example has a configuration in which an imaging region A of the first imaging portion 12 and an imaging region B of the reading unit 1311 overlap.

The handy scanner 131 is used, for example, to read a barcode C attached to a large product I that is difficult to be held over the imaging window W. In the form in which the second imaging portion 13 is fixed to the upper surface of the imaging unit 111 including the first imaging portion 12, it is necessary to separately provide a handy scanner in order to deal with reading of the barcode C attached to the large product I or the like.

On the other hand, in the product reading device 10 according to the present modification example, it is possible to read the barcode C attached to the large product I or the like without separately providing the handy scanner and to improve the reading efficiency of the barcode C since the reading unit 1311 of the handy scanner 131 functions as the second imaging portion 13.

Note that the above is an example of a method of detachably supporting the handy scanner 131 on the imaging unit 111, and the method of detachably supporting the handy scanner 131 on the imaging unit 111 is not limited thereto. For example, instead of the magnet M, a holder or the like that sandwiches and fixes the handy scanner 131 from both sides may be provided.

In short, any method may be used as long as the handy scanner 131 can be detachably supported on the imaging unit 111 in such a manner that the imaging region A and the imaging region B overlap.

It is assumed that the program executed by the product reading device 10 of the above embodiment is provided by being incorporated in advance in a storage medium (ROM 104 or storage unit 109) included in the product reading device 10.

However, this is not a limitation, and the program may be provided by being recorded, as a file in an installable format or an executable format, in a computerreadable recording medium such as a CD-ROM, a flexible disk (FD), a CD-R, or a digital versatile disc (DVD).

Note that the storage medium is not limited to a medium independent of a computer or an embedded system, and includes a storage medium in which a program transmitted via a LAN, the Internet, or the like is downloaded and stored or temporarily stored.

Furthermore, the program executed by the product reading device 10 of the above embodiment may be stored in a computer connected to a network such as the Internet, and provided by being downloaded via the network. In addition, the program executed by the product reading device 10 of the above embodiment may be provided or distributed via the network such as the Internet.

Although embodiments of the present invention have been described above, these embodiments are presented as examples, and are not intended to limit the scope of the invention. These novel embodiments can be implemented in various other forms, and various kinds of omission, substitution, and modification can be made without departing from the gist of the invention. These embodiments and modifications thereof are included in the scope and gist of the invention, and are included in the invention described in claims and an equivalent scope thereof.

### CITATION LIST

### Patent Literature

Patent Literature 1: Japanese Patent Application Laid-Open No. 6-231364

## Claims

1. A product reading device that reads a code symbol attached to a product, the product reading device comprising:
a first reading unit that forms a reading region, in which the code symbol can be read, on a side where an operator is located;
a second reading unit that is provided at a position different from that of the first reading unit, and forms the reading region on the side where the operator is located; and
an information reading unit that reads code information held in the code symbol from a reading result of the first reading unit or the second reading unit, wherein
the reading region of the first reading unit and the reading region of the second reading unit at least partially overlap.

2. The product reading device according to claim 1, wherein
the second reading unit is attached to the first reading unit in a fixed state or a detachable state.

3. The product reading device according to claim 2, further comprising a support portion that supports the first reading unit, wherein
the support portion supports the first reading portion rotatably in a tilt direction.

4. The product reading device according to any one of claims 1 to 3, wherein
the second reading unit is provided above the first reading unit.

5. The product reading device according to any one of claims 1 to 4, wherein
the first reading unit and the second reading unit are imaging portions that image an article, and
an optical axis of the first reading unit and an optical axis of the second reading unit intersect with each other.

6. The product reading device according to any one of claims 1 to 5, further comprising an output unit that outputs the code information read by the information reading unit, wherein
the output unit does not output the same code information until a predetermined time elapses after outputting the code information.
